(19) Europäisches Patentamt
European Patent Office
Office européen des brevets

(11) **EP 3 701 237 B1**

(12) **FASCICULE DE BREVET EUROPEEN**

(45) Date de publication et mention
de la délivrance du brevet:
**20.07.2022 Bulletin 2022/29**

(21) Numéro de dépôt: **18800726.4**

(22) Date de dépôt: **25.10.2018**

(51) Classification Internationale des Brevets (IPC):
**G01M 1/12** *(2006.01)*   **F01D 5/02** *(2006.01)*
**F01D 5/30** *(2006.01)*   **G01M 1/30** *(2006.01)*

(52) Classification Coopérative des Brevets (CPC):
**G01M 1/12; F01D 5/027; G01M 1/30;**
F05D 2260/81; Y02T 50/60

(86) Numéro de dépôt international:
**PCT/FR2018/052654**

(87) Numéro de publication internationale:
**WO 2019/081860 (02.05.2019 Gazette 2019/18)**

(54) **PROCÉDÉ D'ÉQUILIBRAGE D'UN ENSEMBLE D'AUBES**

VERFAHREN ZUM AUSWUCHTEN EINES SCHAUFELSATZES

METHOD FOR BALANCING  A SET OF BLADES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.10.2017 FR 1760093**

(43) Date de publication de la demande:
**02.09.2020 Bulletin 2020/36**

(73) Titulaire: **Safran Aircraft Engines
75015 Paris (FR)**

(72) Inventeurs:
• **MURRY, Antoine Victor
77550 Moissy-Cramayel (FR)**
• **YAHIA BACHA, Mourad
77550 Moissy-Cramayel (FR)**
• **LACAILLE, Jérôme Henri Noël
77550 Moissy-Cramayel (FR)**

(74) Mandataire: **Brevalex
56, Boulevard de l'Embouchure
B.P. 27519
31075 Toulouse Cedex 2 (FR)**

(56) Documents cités:
**JP-A- 2007 198 265**

• **SAMIR V. AMIOUNY ET AL: "Heuristics for
Balancing Turbine Fans", OPERATIONS
RESEARCH., vol. 48, no. 4, 1 août 2000
(2000-08-01), pages 591-602, XP055489688, US
ISSN: 0030-364X, DOI:
10.1287/opre.48.4.591.12413**
• **Yahya Fathi ET AL: "A mathematical model and
a heuristic procedure for the turbine balancing
problem", European Journal of Operational
Research, 1 janvier 1993 (1993-01-01), pages
336-342, XP055489714, DOI:
10.1016/0377-2217(93)90113-2 Extrait de
l'Internet:
URL:https://ac.els-cdn.com/037722179390113
2/1-s2.0-0377221793901132-main.pdf?_tid=e0
01e606-af2d-41bb-be3f-38cddd8e6afa&acdnat=
1530615239_481262e3709ab1aebd7e5f0c2b02d0
c 3**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

La présente invention concerne le domaine d'équilibrage de disques aubagés d'un moteur d'aéronef et plus particulièrement, d'un procédé d'équilibrage d'un ensemble d'aubes destinées à être disposées sur un disque nu d'un moteur d'aéronef.

**ÉTAT DE LA TECHNIQUE ANTÉRIEURE**

Les aubes d'un moteur d'aéronef peuvent présenter des variations de masses liées à leur processus de fabrication et à la présence de certaines aubes particulières ayant des masses différentes des autres aubes. En outre, le disque nu peut éventuellement posséder un balourd radial non négligeable et en particulier les disques nus des turbines basse pression. Ainsi, le montage des aubes sur un disque nu d'un moteur d'aéronef doit être réalisé de manière à minimiser le balourd.

Il existe des algorithmes de placements d'aubes sur des turbines hydrauliques. Ces algorithmes produisent des bons résultats mais prennent un temps de calcul considérable et ne peuvent pas être adaptés pour des moteurs d'aéronefs.

Dans le domaine aéronautique il existe des algorithmes d'équilibrage heuristiques de type non-polynomial « NP difficile » permettant d'augmenter la rapidité du problème d'équilibrage. Un tel exemple est décrit dans le document « Heuristics for Balancing Turbine Fans» de Samir Amiouny 1997. Ce document décrit un procédé d'équilibrage d'un ensemble d'aube destinées à être disposées sur un disque d'un moteur d'aéronef. Un autre exemple est décrit dans le document JP2007198265. Toutefois, les algorithmes répertoriés ne prennent pas en compte les pressions sur les disques liées à des forces centrifuges et des disparités entre des aubes voisines qui peuvent provoquer des déformations des disques ainsi que l'amorçage de criques aux niveaux des alvéoles destinées à recevoir les aubes causant des usures prématurées des disques. En outre, ils ne prennent pas en compte les balourds des disques nus ni les contraintes liées à la présence de certaines aubes particulières.

L'objet de la présente invention est de proposer un procédé d'équilibrage de disques aubagés d'un moteur d'aéronef remédiant aux inconvénients précités, minimisant le temps de calcul tout en prenant en compte les contraintes liées aux forces centrifuges et balourds des disques nus.

**EXPOSÉ DE L'INVENTION**

La présente invention est définie par un procédé d'équilibrage d'un ensemble d'aubes destinées à être disposées sur un disque nu d'un moteur d'aéronef, le disque nu comportant un nombre déterminé d'alvéoles numérotées destinées à recevoir le même nombre déterminé d'aubes qui peuvent présenter une dispersion de masse, ledit procédé comportant les étapes suivantes :

- trier les aubes par ordre monotone de leur masse formant un ensemble ordonné d'aubes,
- séparer l'ensemble ordonné d'aubes de manière équilibrée en quatre lobes constitués d'un premiergros lobe, d'un deuxième gros lobe, d'un premier petit lobe et d'un deuxième petit lobe, les aubes étant classées dans chaque lobe selon un ordre de placement courant, et
- agencer les quatre lobes sur le disque nu en faisant correspondre l'ordre de placement courant des aubes aux alvéoles numérotées du disque nu.

Ainsi, ce procédé permet une automatisation de l'équilibrage de disques aubagés tout en minimisant le nombre d'étapes et optimisant le temps de calcul. En outre, ce procédé permet de répartir les aubes selon une configuration géométrique qui limite les déformations du disque et par conséquent, d'augmenter sa durée de vie. En effet, la répartition des masses des aubes en quatre lobes permet de réduire la pression liée à la force centrifuge.

Avantageusement, la séparation de l'ensemble d'aubes en quatre lobes comporte les étapes suivantes :

- séparer de manière équilibrée l'ensemble ordonné d'aubes en des premier et second groupes sensiblement équilibrés en masse en attribuant des aubes distinctives comprises dans l'ensemble ordonné d'aubes aux premier et second groupes selon un processus prédéterminé et en partageant les autres aubes par ordre décroissant de leur masse de manière alternée entre les premier et second groupes tout en tenant compte du nombre d'aubes distinctives attribuées à chacun des premier et second groupes, et
- composer les premier et deuxième gros lobes de manière équilibrée à partir dudit premier groupe et composer les premier et deuxième petits lobes de manière équilibrée à partir dudit second groupe.

Ceci permet de distribuer les aubes d'une manière qui ne provoque pas un amorçage de crique au niveau des alvéoles. En outre, la création de deux groupes initialement équilibrés permet de minimiser le nombre d'itération de l'algorithme d'équilibrage dans le cas où le balourd sur le disque nu est faible (ce qui représente la majorité de cas).

Selon un mode de réalisation de la présente invention, les aubes distinctives sont des aubes à léchettes durcies qui sont distribuées entre les premier et second groupes suivant leur nombre tout en optimisant l'espacement entre elles, selon les étapes suivantes :

- si l'ensemble d'aubes comporte trois aubes à léchettes durcies, les deux plus lourdes sont placées dans le premier groupe tandis que la plus légère est placée dans le second groupe, et
- si l'ensemble d'aubes comporte une à deux aubes à léchettes durcies, elle(s) est(sont) placée(s) dans le premier groupe.

Ceci permet aux aubes à léchettes de creuser de manière optimale l'abradable placé sur le carter en face des aubes permettant par conséquent, d'optimiser la compression d'air dans le moteur.

Avantageusement, la composition des premier et deuxième gros ou petits lobes au sein du premier ou second groupes respectivement est réalisée en distribuant les aubes sur des premier, deuxième, troisième et quatrième demi-lobes du premier ou second groupe en fonction des propriétés de parité et/ou de divisibilité du nombre d'aubes constituant le premier groupe ou le second groupe.

Ceci permet une répartition optimale des masses des aubes.

Selon un premier cas d'un mode de réalisation de la présente invention, si le nombre d'aubes du premier ou second groupe est un nombre pair non divisible par quatre, alors les première et deuxième aubes sont placées aux sommets des premier et deuxième gros ou petits lobes et les aubes restantes sont distribuées de manière prédéterminée sur les premier, deuxième, troisième et quatrième demi-lobes du premier ou second groupe.

Selon un deuxième cas du mode de réalisation de la présente invention, si le nombre d'aubes du premier ou second groupe est un nombre divisible par quatre, alors les aubes sont distribuées équitablement de manière prédéterminée sur les premier, deuxième, troisième et quatrième demi-lobes du premier ou second groupe.

Selon un troisième cas du mode de réalisation de la présente invention, si le nombre d'aubes du premier ou second groupe est un nombre impair, alors la dernière aube est positionnée entre les deux gros ou petits lobes et si le nombre d'aubes restantes est divisible par quatre, alors elles sont distribuées de manière prédéterminée sur les premier, deuxième, troisième et quatrième demi-lobes du premier ou second groupe.

Selon un quatrième cas du mode de réalisation de la présente invention, si le nombre d'aubes du premier ou second groupe est un nombre impair, alors la dernière aube est positionnée entre les deux gros ou petits lobes et si le nombre d'aubes restantes est non divisible par quatre, alors les première et deuxième aubes sont placées aux sommets des premier et deuxième gros ou petits lobes et les aubes restantes sont distribuées de manière prédéterminée sur les premier, deuxième, troisième et quatrième demi-lobes du premier ou second groupe.

Avantageusement, la distribution de manière prédéterminée d'un nombre d'aubes divisible par quatre sur les premier, deuxième, troisième et quatrième demi-lobes du premier ou second groupe est réalisée selon des séquences périodiques de huit étapes de la manière suivante :

- placer la première aube courante en première position non occupée du deuxième demi-lobe,
- placer la deuxième aube courante en première position non occupée du premier demi-lobe,
- placer la troisième aube courante en première position non occupée du quatrième demi-lobe,

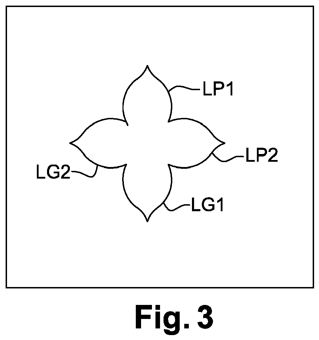

En effet, la Fig. 3 illustre de manière schématique le placement des aubes en quatre lobes, selon un mode de réalisation de l'invention.

Les aubes 5 sont représentées par des segments radiaux dont les longueurs sont représentatives de leurs masses. Ainsi, les différentes longueurs caractérisent la dispersion massique des aubes. Plus particulièrement, les quatre lobes sont constitués d'un premier gros lobe LG1, d'un deuxième gros lobe LG2, d'un premier petit lobe LP1 et d'un deuxième petit lobe LP2. Cette configuration représente la forme optimale pour réduire la pression liée à la force centrifuge tout en étant le plus simple à réaliser. On notera qu'une configuration équilibrée mais n'ayant pas une forme en lobes aura tendance à déformer le disque. Par ailleurs, lorsqu'on a seulement deux lobes, le disque aura tendance à devenir ovale au fur et à mesure de son exploitation, à cause de la force de pression. Un nombre de lobes plus élevé que quatre est très complexe à réaliser et n'apporte pas de gains notables au niveau de la réduction de pression.

A l'étape E4, le processeur 9 est configuré pour agencer les quatre lobes LG1, LG2, LP1, LP2 sur le disque nu 7 en faisant correspondre l'ordre de placement courant des aubes 5 tel que défini dans le vecteur de masse V courant aux alvéoles $a_i$ numérotées du disque nu 7.

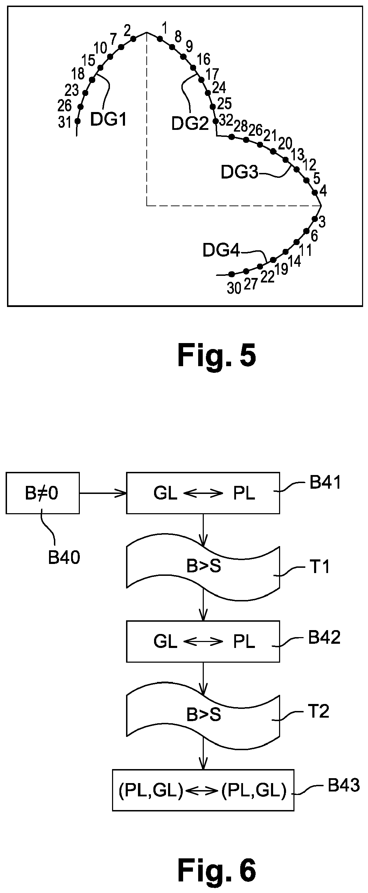

En outre, au cas où le disque nu 7 présente un balourd initial, les aubes 5 dans les différents lobes peuvent être réorganisées suivant un processus itératif de permutation pour compenser le balourd du disque 7 selon un mode de réalisation de l'invention décrit plus loin en référence à la Fig. 5.

Avantageusement, à la fin du procédé les éléments du vecteur masse sont ordonnés dans le même ordre que l'ordre de numérotation des alvéoles simplifiant ainsi le montage de ces dernières.

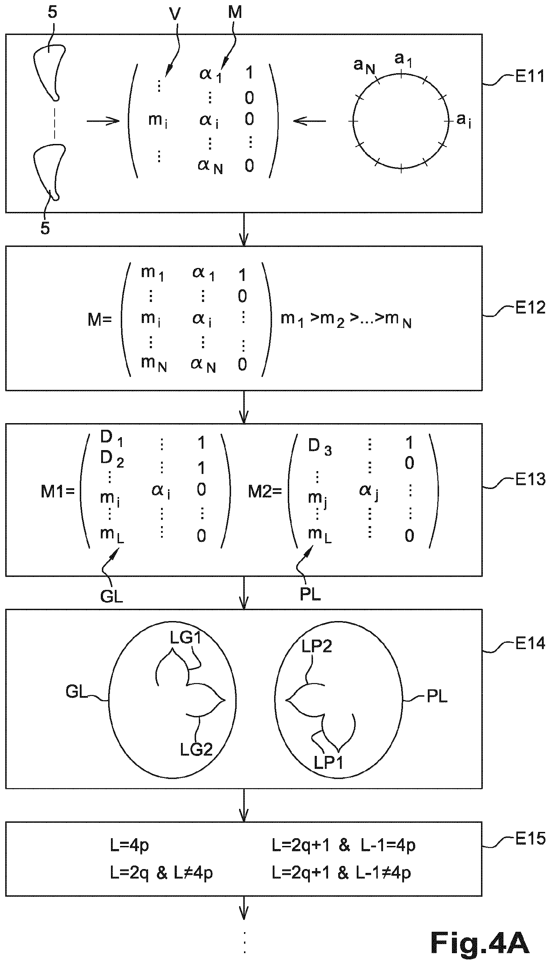

Les Figs. 4A - 4D illustrent un procédé d'équilibrage des aubes sur un disque nu d'un moteur d'aéronef, selon un mode de réalisation préféré de l'invention.

- si, à l'issue des permutations de l'étape précédente, le balourd résultant est supérieur audit seuil prédéterminé, alors on réalise des permutations stochastiques directement sur la forme entre le premier groupe et le second groupe.

Ceci permet un équilibrage total du balourd inférieur au seuil prédéterminé. Cet équilibrage est avantageusement réalisé en respectant la forme monotone des masses d'aubes et éventuellement en la déformant légèrement si les première et deuxième étapes de permutations étaient insuffisantes pour respecter le critère d'équilibrage.

Avantageusement, on continue les itérations dans chacune des étapes de permutation tant que le balourd résultant est supérieur au seuil prédéterminé et que le nombre d'itérations est inférieur à un nombre maximal prédéterminé.

La présente invention vise également un système d'équilibrage d'un ensemble d'aubes destinées à être disposées sur un disque nu d'un moteur d'aéronef, le disque nu comportant un nombre déterminé d'alvéoles numérotées destinées à recevoir le même nombre déterminé d'aubes qui peuvent présenter une dispersion de masse, ledit système comportant un processeur configuré pour :

- trier les aubes par ordre monotone de leur masse formant un ensemble ordonné d'aubes,
- séparer l'ensemble ordonné d'aubes de manière équilibrée en quatre lobes constitués d'un premier gros lobe, d'un deuxième gros lobe, d'un premier petit lobe et d'un deuxième petit lobe, les aubes étant classées dans chaque lobe selon un ordre de placement courant, et
- agencer les quatre lobes sur le disque nu en faisant correspondre l'ordre de placement courant des aubes aux alvéoles numérotées du disque nu.

## BRÈVE DESCRIPTION DES DESSINS

La Fig. 1 illustre de manière schématique des moyens matériels mis en œuvre dans le procédé d'équilibrage, selon l'invention ;

La Fig. 2 est un organigramme illustrant un procédé d'équilibrage d'un ensemble d'aubes destinées à être disposées sur un disque nu d'un moteur d'aéronef, selon un mode de réalisation de l'invention ;

La Fig. 3 illustre de manière schématique un placement d'aubes en quatre lobes, selon un mode de réalisation de l'invention ;

Les Figs. 4A - 4D illustrent un procédé d'équilibrage des aubes sur un disque nu d'un moteur d'aéronef, selon un mode de réalisation préféré de l'invention ;

La Fig. 5 est un exemple illustrant de manière schématique le placement d'aubes, selon un mode de réalisation de l'invention ;

La Fig. 6 est un schéma en bloc illustrant le processus de permutation pour l'équilibrage du balourd total, selon un mode de réalisation de l'invention ;

La Fig. 7 est un organigramme illustrant plus en détail le processus itératif de permutation d'un bloc de la Fig. 6, selon un mode de réalisation de l'invention ;

Les Fig. 8A et 8B illustrent une répartition des aubes selon leurs masses, ainsi que le positionnement des aubes à léchettes durcies résultant des tests du procédé selon un mode de réalisation de l'invention ; et

Les Figs. 9A-9C montrent un exemple illustrant l'évolution du balourd résultant en fonction du nombre d'itérations, selon un mode de réalisation de l'invention.

## EXPOSÉ DÉTAILLÉ DE MODES DE RÉALISATION PARTICULIERS

Le concept de l'invention consiste à établir une correspondance entre des aubes destinées à être montées sur un disque nu d'un moteur de manière équilibrée tout en augmentant la durée de vie du disque en minimisant sa déformation sachant que les aubes peuvent présenter une dispersion au niveau de leur masse.

La présente invention s'applique au montage d'aubes sur un disque nu de tout type de moteurs comme par exemple les moteurs d'aéronefs et en particulier sur les disques de turbines basse pression d'un aéronef.

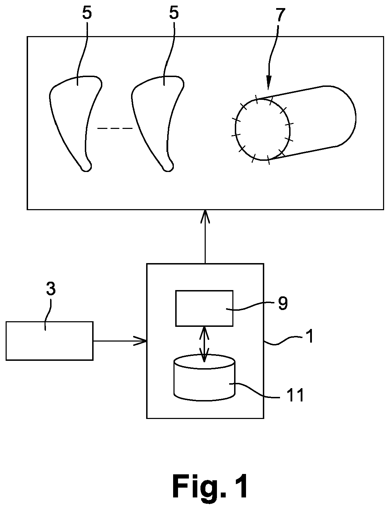

La Fig. 1 illustre de manière schématique les moyens matériels mis en œuvre dans le procédé d'équilibrage selon l'invention.

Les moyens matériels comportent un ordinateur 1 ainsi que des instruments de mesures 3 et en particulier des instruments pour évaluer les masses $m_i$ des aubes 5 destinées à être montées sur un disque nu 7 d'un moteur d'aéronef.

L'ordinateur est muni de manière habituelle d'un processeur 9 utilisé pour l'exécution d'un ou de plusieurs programmes d'ordinateur comprenant des instructions de code de programme, stockés dans des unités de stockage 11 de l'ordinateur 1 et conçus et configurés pour mettre en œuvrele procédé d'équilibrage selon l'invention.

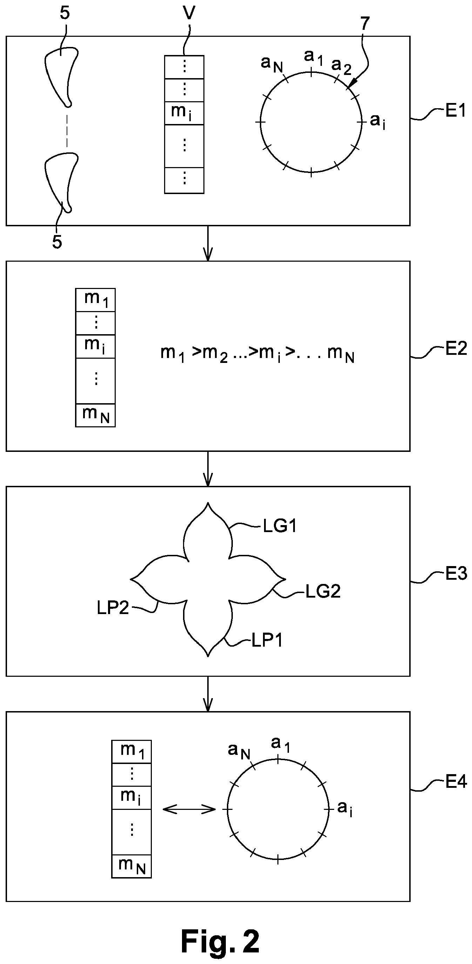

La Fig. 2 est un organigramme illustrant un procédé d'équilibrage d'un ensemble d'aubes destinées à être disposées sur un disque nu d'un moteur d'aéronef, selon un mode de réalisation de l'invention.

L'étape E1 concerne l'initialisation des données comportant la masse $m_i$ de chaque aube 5 et le nombre d'alvéoles ai du disque nu 7 destinées à recevoir les aubes 5. Plus particulièrement, les alvéoles ai sont numérotées dans l'ordre de 1 à N (i.e. $a_1,... a_N$) dans un sens défini (par exemple, dans le sens horaire) et sont toutes espacées de la même distance sur le disque 7. Ainsi, en connaissant le nombre total N des alvéoles ai sur le disque 7, on peut déduire leurs positions angulaires $\alpha_i$. Les masses $m_i$ des aubes 5 sont définies par un vecteur masse V de dimension N dont chaque élément $m_i$ doit correspondre à une et une seule alvéole ai. Le but du procédé d'équilibrage est d'établir une correspondance bijective entre les éléments $m_i$ du vecteur masse V et les alvéoles ai du disque 7. Cette correspondance permet un montage facile des aubes 5 dont le positionnement sur le disque nu 7 tient compte de la dispersion de leur masse pour satisfaire un critère de balourd ainsi que d'autres éventuelles contraintes.

A l'étape E2, le processeur 9 est configuré pour trier les aubes 5 par ordre monotone (par exemple, décroissant) de leur masse formant ainsi un ensemble ordonné d'aubes 5. Le vecteur de masse V initial peut ainsi être réarrangé pour former un vecteur de masse V courant selon l'ordre décroissant des aubes 5.

A l'étape E3, le processeur 9 est configuré pour séparer l'ensemble ordonné d'aubes 5 de manière équilibrée en quatre groupes, dits lobes LG1, LG2, LP1, LP2. Les aubes 5 sont classées dans chaque lobe selon un ordre de placement particulier représentant un ordre de placement courant permettant d'actualiser le vecteur de masse V courant. Deux des quatre lobes sont catégorisés dans une première classe, dite « Gros lobes » LG1 et LG2, et les deux autres sont catégorisés dans une deuxième classe, dite « Petits lobes » LP1 et LP2.

En effet, la Fig. 3 illustre de manière schématique le placement des aubes en quatre lobes, selon un mode de réalisation de l'invention.

Les aubes 5 sont représentées par des segments radiaux dont les longueurs sont représentatives de leurs masses. Ainsi, les différentes longueurs caractérisent la dispersion massique des aubes. Plus particulièrement, les quatre lobes sont constitués d'un premier gros lobe LG1, d'un deuxième gros lobe LG2, d'un premier petit lobe LP1 et d'un deuxième petit lobe LP2. Cette configuration représente la forme optimale pour réduire la pression liée à la force centrifuge tout en étant le plus simple à réaliser. On notera qu'une configuration équilibrée mais n'ayant pas une forme en lobes aura tendance à déformer le disque. Par ailleurs, lorsqu'on a seulement deux lobes, le disque aura tendance à devenir ovale au fur et à mesure de son exploitation, à cause de la force de pression. Un nombre de lobes plus élevé que quatre est très complexe à réaliser et n'apporte pas de gains notables au niveau de la réduction de pression.

A l'étape E4, le processeur 9 est configuré pour agencer les quatre lobes LG1, LG2, LP1, LP2 sur le disque nu 7 en faisant correspondre l'ordre de placement courant des aubes 5 tel que défini dans le vecteur de masse V courant aux alvéoles ai numérotées du disque nu 7.

En outre, au cas où le disque nu 7 présente un balourd initial, les aubes 5 dans les différents lobes peuvent être réorganisées suivant un processus itératif de permutation pour compenser le balourd du disque 7 selon un mode de réalisation de l'invention décrit plus loin en référence à la Fig. 5.

Avantageusement, à la fin du procédé les éléments du vecteur masse sont ordonnés dans le même ordre que l'ordre de numérotation des alvéoles simplifiant ainsi le montage de ces dernières.

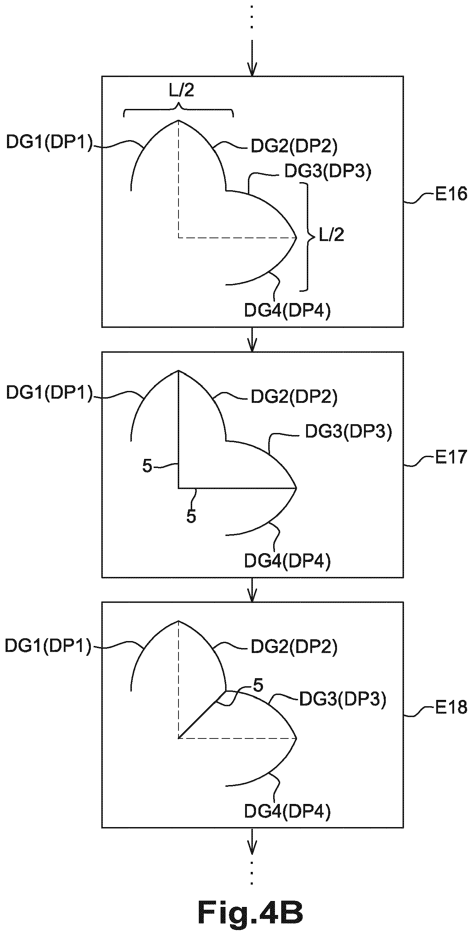

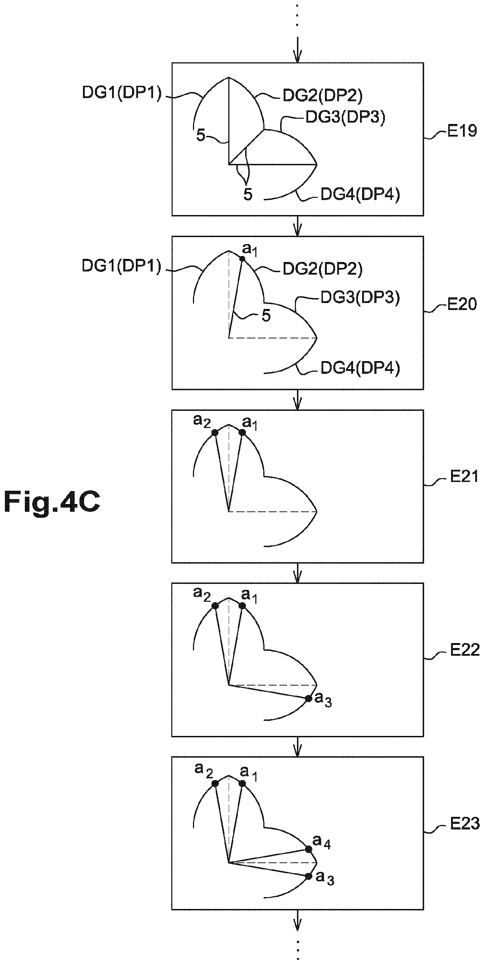

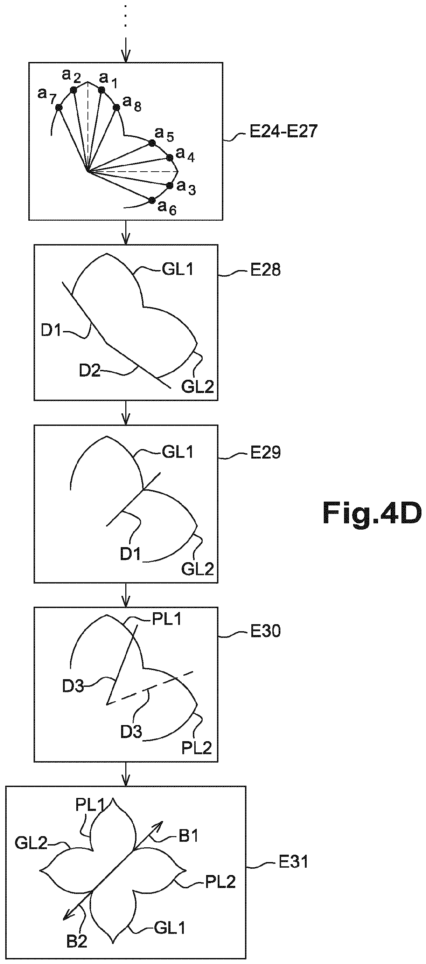

La Fig. 4 illustre un procédé d'équilibrage des aubes sur un disque nu d'un moteur d'aéronef, selon un mode de réalisation préféré de l'invention.

A l'étape E11, les données concernant les aubes 5 et le disque nu 7 sont initialisées. Ces données comportent la masse $m_i$ de chaque aube 5 et sa spécificité, c'est-à-dire si elle est particulière (par exemple du type à léchette durcie) ou pas. Les données d'initialisation comportent également le nombre N d'alvéoles ai numérotées du disque nu

A l'étape E11, les données concernant les aubes 5 et le disque nu 7 sont initialisées. Ces données comportent la masse $m_i$ de chaque aube 5 et sa spécificité, c'est-à-dire si elle est particulière (par exemple du type à léchette durcie) ou pas. Les données d'initialisation comportent également le nombre N d'alvéoles $a_i$ numérotées du disque nu 7, le rayon R du disque nu 7, le balourd du disque nu 7 en cm.g, et l'angle du balourd du disque nu 7 en degré.

Avantageusement, les données concernant les aubes 5 peuvent être organisées selon une matrice d'aubes M composée de trois colonnes. Pour une ligne donnée associée à une aube 5 donnée, la première colonne contient la masse $m_i$ de l'aube 5, la deuxième colonne contient l'angle $\alpha_i$ de l'alvéole $a_i$ destinée à recevoir ladite aube et la troisième colonne indique si l'aube 5 est particulière ou pas (par exemple le chiffre « 1 » représente une aube particulière et le chiffre « 0 » représente une aube standard). On notera que la première colonne représente le vecteur masse V des aubes 5.

Dans la suite, on prendra une aube à léchette durcie comme exemple d'une aube particulière. On rappelle qu'une aube à léchette durcie est adaptée pour créer des rainures dans l'abradable placé sur le carter en face des aubes afin d'optimiser la compression d'air dans le moteur.

A l'étape E12, le processeur 9 est configuré pour trier les aubes 5 par ordre décroissant de leur masse $m_i$ formant un ensemble ordonné d'aubes consigné dans la première colonne de la matrice d'aubes M.

Aux étapes E13-E30, le processeur 9 est configuré pour classer les aubes en quatre lobes : un premier gros lobe LG1, un deuxième gros lobe LG2, un premier petit lobe LP1 et un deuxième petit lobe LP2.

Plus particulièrement, à l'étape E13, le processeur 9 est configuré pour séparer de manière équilibrée l'ensemble ordonné d'aubes 5 en des premier et second groupes GL et PL sensiblement équilibrés en masse consignés dans des première et deuxième matrices M1 et M2 respectivement. Les premier et deuxième groupes GL et PL correspondent à un groupe de gros lobes et un groupe de petits lobes respectivement.

En premier lieu, les aubes distinctives $D_i$ (i.e. aubes à léchettes durcies) comprises dans l'ensemble ordonné d'aubes 5 sont attribuées aux premier et second groupes GL et PL suivant leur nombre.

En particulier, si l'ensemble d'aubes 5 comporte trois aubes à léchettes durcies $D_1$-$D_3$, les deux plus lourdes $D_1$ et $D_2$ sont placées dans le premier groupe GL tandis que la plus légère $D_1$ est placée dans le second groupe PL.

En revanche, si l'ensemble d'aubes comporte une à deux aubes à léchettes durcies $D_i$, elle(s) est(sont) placée(s) dans le premier groupe GL.

On notera que le placement des aubes particulières $D_i$ est réalisé selon un processus prédéterminé destiné à optimiser l'espacement de ces aubes comme expliqué plus loin aux étapes E28-E30.

Par ailleurs, une fois que les aubes à léchettes durcies $D_i$ sont placées dans les deux groupes GL et PL, il s'agit ensuite de répartir les aubes 5 restantes. Les autres aubes sont partagées par ordre décroissant de leur masse de manière alternée entre les premier et second groupes GL et PL. Le placement de ces aubes 5 restantes est réalisé en tenant compte du nombre d'aubes distinctives $D_i$ attribuées à chacun des premier et second groupes GL et PL afin que ces derniers soient de taille égale. En effet, les premier et deuxième groupes GL et PL sont d'abord rééquilibrés en plaçant le nombre d'aubes nécessaire dans le deuxième groupe PL. Ainsi, si l'ensemble d'aubes 5 comporte une ou trois aube(s) à léchette(s) durcie(s) $D_i$, alors une aube 5 standard est placée dans le deuxième groupe PL. Par ailleurs, si l'ensemble d'aubes comporte deux aubes à léchettes durcies $D_i$, alors deux aubes 5 standard sont placées dans le deuxième groupe PL. Le placement est ensuite réalisé en triant les aubes 5 par masse décroissante en commençant par le premier groupe GL. La première aube est placée dans le premier groupe GL, la deuxième dans le deuxième groupe PL et ainsi de suite. On notera que les aubes 5 sont ordonnées selon leur masse de manière décroissante dans chacun des premier et deuxième groupes GL, PL.

A l'étape E14 le processeur 9 est configuré pour composer les premier et deuxième gros lobes GL1, GL2 de manière équilibrée à partir du premier groupe GL et pour composer les premier et deuxième petits lobes PL1, PL2 de manière équilibrée à partir du second groupe PL. Le classement des aubes 5 dans chacun des quatre lobes GL1, GL2, PL1, PL2 est réalisé selon un ordre déterminé.

La composition des premier et deuxième gros lobes GL1, GL2 ou petits lobes PL1, PL2 au sein du premier GL ou second PL groupes respectivement est réalisée en distribuant les aubes 5 sur des premier, deuxième, troisième et quatrième demi-lobes DG1-DG4 ou DP1-DP4 du premier GL ou second PL groupe en fonction des propriétés de parité et/ou de divisibilité du nombre d'aubes 5 constituant le premier groupe GL ou le second groupe PL.

A l'étape E15 le processeur 9 est configuré pour déterminer la parité et la divisibilité du nombre L d'aubes d'un groupe GL ou PL, selon quatre cas prédéterminés. En effet, pour créer les deux lobes au sein de chacun des deux groupes à partir d'un nombre L d'aubes, on envisage les quatre possibilités suivantes : L est divisible par quatre, L est pair et non divisible par quatre, L est impair et L-1 est divisible par quatre, et finalement L est impair et L-1 est non divisible par quatre. Chacune des quatre possibilités donne lieu à une étape correspondante de placement d'aubes parmi les étapes E16-E19.

L'étape E16 concerne le cas où le nombre L d'aubes du premier GL ou second PL groupe est un nombre divisible par quatre. Dans ce cas, les aubes 5 sont distribuées équitablement de manière prédéterminée sur les premier, deuxième, troisième et quatrième demi-lobes DG1-DG4 ou DP1-DP4 du premier GL ou second PL groupe. Un quart d'aubes (L/4) sont placées sur chacun des quatre demi-lobes, selon les étapes E20-E27.

L'étape E17 concerne le cas où le nombre L d'aubes du premier GL ou second groupe PL est un nombre pair non divisible par quatre. Dans ce cas, les première et deuxième aubes sont placées aux sommets des premier et deuxième (gros ou petits) lobes (GL1 et GL2 ; ou PL1 et PL2). Les aubes restantes (ayant maintenant un nombre divisible par quatre) sont distribuées de manière prédéterminée sur les premier, deuxième, troisième et quatrième demi-lobes DG1-DG4 ou DP1-DP4 du premier GL ou second PL groupe. Ainsi, les aubes étant au préalable triées par masse décroissante, la première aube (i.e. l'aube la plus lourde) de la matrice d'aubes correspondante M1 ou M2 est placée au sommet du premier lobe GL1 ou PL1 et la deuxième aube de la matrice d'aubes correspondante est placée au sommet du deuxième lobe GL1 ou PL1. Ces deux aubes sont ensuite supprimées de la matrice d'aubes correspondante avant de passer aux étapes E20-E27.

L'étape E18 concerne le cas où le nombre L d'aubes du premier GL ou second PL groupe est un nombre impair et où le nombre d'aubes décrémenté d'une unité (i.e. L-1) est divisible par quatre. Dans ce cas, la dernière aube (i.e. l'aube la plus légère) est positionnée entre les deux (gros ou petits) lobes et les aubes restantes (dont le nombre est divisible par quatre) sont distribuées de manière prédéterminée sur les premier, deuxième, troisième et quatrième demi-lobes du premier ou second groupe. L'aube la plus légère qui a été positionnée entre les deux lobes est ensuite supprimée de la matrice d'aubes avant de passer aux étapes E20-E27 pour placer un quart des aubes restantes ((L-1)/4) sur chaque demi-lobe.

L'étape E19 concerne le cas où le nombre d'aubes du premier ou second groupe est un nombre impair et où le nombre d'aubes décrémenté d'une unité (i.e. L-1) est non divisible par quatre. Dans ce cas, la dernière aube (i.e. l'aube la plus légère) est positionnée entre les deux (gros ou petits) lobes (GL1 et GL2 ; ou PL1 et PL2) et les première et deuxième aubes sont placées aux sommets des premier et deuxième (gros ou petits) lobes (GL1 et GL2 ; ou PL1 et PL2). Les aubes restantes (ayant un nombre divisible par quatre) sont distribuées de manière prédéterminée sur les premier, deuxième, troisième et quatrième demi-lobes du premier ou second groupe. La figure correspondant à cette étape montre bien que l'aube la plus légère du groupe est positionnée entre les deux lobes (GL1 et GL2 ; ou PL1 et PL2) et la première aube de la matrice d'aubes correspondante (i.e. l'aube la plus lourde) est placée au sommet de la première lobe (GL1 ou PL1) et la deuxième aube de la matrice est placée au sommet de la deuxième lobe (GL2 ou PL2). Ces trois aubes sont ensuite supprimées de la matrice d'aubes avant de passer aux étapes E20-E27 pour placer un quart des aubes restantes sur chaque demi-lobe.

Le placement des aubes restantes (composées d'un nombre K divisible par quatre) est effectué selon un protocole de distribution prédéterminée suivant des séquences périodiques de huit étapes E20-E27. On notera que les demi-lobes représentés sur les figures associées aux étapes E20-E27 font référence aux quatre gros demi-lobes DG1-DG4 ou au quatre petits demi-lobes DP1-DP2.

A l'étape E20, le processeur 9 est configuré pour placer la première aube $a_1$ courante (i.e. l'aube la plus lourde parmi les aubes restantes) en première position non occupée du deuxième demi-lobe DG2 ou DP2.

A l'étape E21, le processeur 9 est configuré pour placer la deuxième aube $a_2$ courante en première position non occupée du premier demi-lobe DG1 ou DP1.

A l'étape E22, le processeur 9 est configuré pour placer la troisième aube $a_3$ courante en première position non occupée du quatrième demi-lobe DG4 ou DP4.

A l'étape E23, le processeur 9 est configuré pour placer la quatrième aube $a_4$ courante en première position non occupée du troisième demi-lobe DG3 ou DP3.

Aux étapes E24-E27, le processeur 9 est configuré pour placer les quatre aubes suivantes $a_5$-$a_8$ sur les demi-lobes dans le sens inverse des étapes précédentes E20-E23. Autrement dit, à l'étape E24, la cinquième aube ascourante est placée en première position non occupée du troisième demi-lobe DG3 ou DP3. A l'étape E25, la sixième aube $a_6$ courante est placée en première position non occupée du quatrième demi-lobe DG4 ou DP4. A l'étape E26, la septième aube $a_7$ courante est placée en première position non occupée du premier demi-lobe DG1 ou DP1. A l'étape E27, la huitième aube $a_8$ courante est placée en première position non occupée du deuxième demi-lobe DG2 ou DP2.

La Fig. 5 est un exemple illustrant de manière schématique le placement d'aubes selon les étapes E20-E27. Dans cet exemple, le nombre K des aubes restantes est égal à « 32 » et sont classées de « 1 » à « 32 » de la masse la plus lourde à la plus légère.

On cherche à placer huit aubes sur chacun des quatre gros demi-lobes DG1-DG4. Ainsi, l'aube la plus lourde, représentée par le numéro « 1 », est placée en première position du deuxième demi-lobe DG2. La seconde aube est placée en première position du premier demi-lobe DG1. Les aubes « 3 » et « 4 » suivent le même schéma sur le deuxième lobe DG4 et DG3. Puis la procédure est inversée afin d'équilibrer au mieux les deux lobes.

Ainsi, au départ, les deux aubes les plus lourdes (aubes « 1 » et « 2 ») ont été positionnées sur le premier lobe LG1 et les deux suivantes (aubes « 3 » et « 4 ») sur le deuxième lobe LG2. Ensuite, les deux aubes les plus lourdes (aubes « 5 » et « 6 ») sont positionnées sur le deuxième lobe LG2 et les deux plus légères (aubes « 7 » et « 8 ») sur le premier lobe LG1. Ces opérations sont réitérées jusqu'à ce qu'on atteigne la dernière aube « 32 » à placer.

D'un point de vue algorithmique, quatre vecteurs sont générés contenant les suites de nombre des quatre demi-lobes suivantes :

Premier demi-lobe DG1: (31, 26, 23, 18, 15, 10, 7, 2).
Deuxième demi-lobe DG2: (1, 8, 9, 16, 17, 24, 25, 32).
Troisième demi-lobe DG3: (29, 28, 21, 20, 13, 12, 5, 4).
Quatrième demi-lobe DG4: (3, 6, 11, 14, 19, 22, 27, 30).

Une fois les quatre demi-lobes DG1-DG4 créés, les aubes à léchettes durcies sont placées aux étapes E28-E30 suivant une configuration la plus espacée possible.

En effet, les étapes E28-E30 correspondent à un processus prédéterminé de placement des aubes à léchettes durcies.

Plus particulièrement, l'étape E28 concerne le cas où trois aubes à léchettes durcies $D_1$-$D_3$ sont présentes dans le jeu initial. Comme indiqué précédemment, les deux plus lourdes $D_1$ et $D_2$ sont placées dans le premier groupe GL (i.e premier et deuxième gros lobes GL1 et GL2) tandis que la plus légère $D_3$ est placée dans le second groupe PL (i.e premier ou deuxième petit lobe PL1 et PL2). Les deux lobes les plus lourdes $D_1$ et $D_2$ placées dans les premier et deuxième gros lobes GL1 et GL2 sont espacées le plus possible (idéalement avec un écart angulaire d'environ 120°) en les permutant avec d'autres aubes de mêmes masses et se trouvant sur les demi-lobes externes (i.e première DG1 et quatrième demi-lobes DG4).

L'étape E29 concerne le cas où une seule aube à léchette durcie $D_1$ se trouve dans le premier groupe GL (i.e premier et deuxième gros lobes GL1 et GL2). Dans ce cas, l'aube particulière $D_1$ est placée le plus proche possible du milieu des deux gros lobes GL1 et GL2.

Finalement, l'étape E30 concerne le cas où il y a une aube à léchette durcie $D_3$ dans le second groupe (i.e premier ou deuxième petit lobe PL1 et PL2). Celle-ci est placée le plus proche possible du milieu des deux petits lobes PL1 et PL2 selon deux configurations possibles. Dans un premier cas, l'aube à léchette durcie $D_3$ (en pointillé) est placée entre le sommet et la fin du premier petit lobe PL1. Dans un deuxième cas, l'aube à léchette durcie $D_3$ (en pointillé) est placée entre le début et le sommet du deuxième petit lobe PL2. La configuration retenue est celle qui optimise l'espacement entre toutes les aubes à léchettes durcies présentes sur le disque.

Afin de positionner chaque aube à léchette durcie comme décrit précédemment, cette dernière est intervertie avec l'aube la plus proche en masse dans la zone recherchée (i.e. dans la demi-lobe où on souhaite placer l'aube à léchette durcie).

Une fois que les première et deuxième matrices M1 et M2 (associées aux premier et deuxième groupes GL et PL) ont été ordonnées selon l'ordre de dépôt des aubes formant les quatre lobes GL1, GL2, PL1 et PL2, il s'agit ensuite de reformer la matrice totale M des aubes selon leur ordre de dépôt dans les alvéoles du disque (i.e. la première aube apparaissant sur la première ligne de la matrice d'aubes M sera placée dans la première alvéole $a_1$ et ainsi de suite).

Ainsi, à l'étape E31, les quatre lobes PL1, PL2, GL1 et GL2 sont agencés sur le disque nu en les disposant suivant une configuration déterminée par rapport au premier vecteur balourd B1 représentatif du balourd du disque nu. Avantageusement, la configuration déterminée comporte l'agencement des premier et deuxième petits lobes PL1 et PL2 sur le disque nu de part et d'autre du premier vecteur balourd B1.

On notera que la position du balourd du disque nu sur les alvéoles dépend de l'angle du balourd du disque nu et de l'angle des alvéoles du disque. Les alvéoles sont positionnées selon un séquençage régulier des 360° par le nombre d'alvéoles en partant de la position « 1 » correspondant à l'angle 0°. On obtient ainsi la position correspondant à l'angle du balourd du disque nu dans la matrice de correspondance des alvéoles.

Ceci permet d'obtenir le vecteur masse des aubes voulu comportant le positionnement des aubes autour du disque de sorte que le balourd du disque nu soit placé entre les deux petits lobes. La taille des quatre lobes dépend du nombre d'aubes du jeu fourni initialement.

Par construction de l'algorithme de placement des aubes, on peut remarquer que la forme obtenue permet de satisfaire les contraintes de l'optimisation. En effet, on obtient bien une forme en quatre lobes, une continuité de la masse des aubes adjacentes et une optimisation de l'espacement des aubes à léchettes durcies.

Par ailleurs, étant donné que les premier et deuxième petits lobes PL1, PL2 et premier et deuxième gros lobes GL1, GL2 ont été créés initialement de manière équilibrée, le balourd engendré par les aubes est proche de zéro. Toutefois, le balourd de l'ensemble « aubes + disque » n'est pas forcément proche de zéro à cause du fait que le disque nu possède un certain balourd initial. Ainsi, afin d'équilibrer le balourd total, les aubes sont réorganisées selon un processus itératif de permutation d'aubes.

En effet, la Fig. 6 est un schéma en bloc illustrant le processus de permutation pour l'équilibrage du balourd total, selon un mode de réalisation de l'invention.

Au bloc B40, on commence avec des aubes ayant un balourd proche de zéro et un balourd résultant B non nul.

Au bloc B41, les aubes sont réorganisées par le processeur 9 dans les différents lobes selon un processus itératif de permutation adapté pour équilibrer le premier vecteur balourd B1 par un second vecteur balourd B2 (voir figure de l'étape E31) résultant de la dispersion de masse des aubes et de leurs agencements sur le disque en respectant la monotonie des masses d'aubes. On notera qu'à chaque itération le balourd resultant (i.e. total) est calculé et le processus itératif continue tant que le balourd restant n'est pas inférieur à un seuil prédéterminé S (par exemple d'environ 5 cm.g) et qu'un premier nombre maximal d'itérations n'est pas atteint. A titre d'exemple, le seuil de balourd prédéterminé peut être compris entre environ 1 cm.g et 5 cm.g.

Un test T1 est exécuté à l'issue des permutations réalisées dans le bloc B41 pour vérifier si le balourd résultant B est supérieur au seuil prédéterminé S. Si oui, on passe au bloc B42 et sinon on s'arrête.

Au bloc B42, le processeur 9 réalise des permutations stochastiques d'aubes entre le premier groupe GL et le second groupe PL tout en respectant la monotonie des masses d'aubes. De manière similaire au bloc B41, le balourd résultant est calculé à chaque itération et le processus itératif continue tant que le balourd résultant n'est pas inférieur au seuil prédéterminé et qu'un deuxième nombre maximal d'itérations n'est pas atteint.

Un test T2 est exécuté à l'issue des permutations réalisées dans le bloc B42 pour vérifier si le balourd résultant B est toujours supérieur au seuil prédéterminé S. Si oui, on passe au bloc B43 et sinon on s'arrête.

Au bloc B43, le processeur réalise des permutations stochastiques « directement sur la forme » entre le premier groupe et le second groupe sans forcément respecter la monotonie des masses d'aubes. Par « directement sur la forme », on entend le fait que les aubes soient permutées sans réappliquer l'algorithme de placement des aubes. Cela implique que l'algorithme d'équilibrage du balourd total peut se permettre de déformer la forme et donc de potentiellement ne plus respecter la contrainte de monotonie des masses d'aubes. Cela dit, cette contrainte sera prise en compte dans la fonction à optimiser via l'algorithme d'optimisation stochastique.

On notera que la réorganisation des aubes à la fin du processus d'itération de l'un quelconque des blocs B41-B43 définit un ordre de placement final des aubes sur les alvéoles du disque.

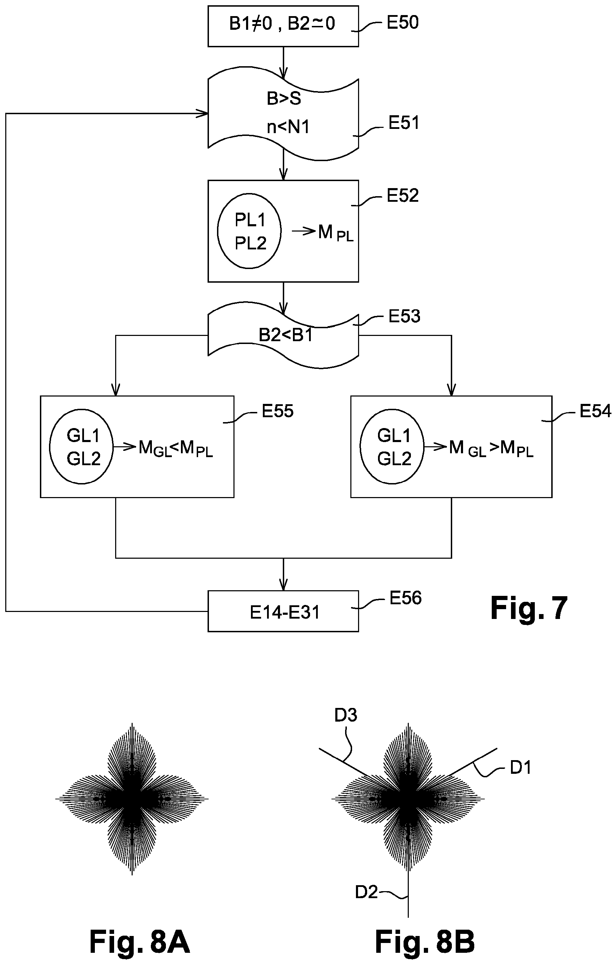

La Fig. 7 est un organigramme illustrant plus en détail le processus itératif de permutation du bloc B41, selon un mode de réalisation de l'invention.

A l'étape initiale E50, le balourd des aubes est quasi nul, car les lobes sont créés de manière équilibrée. Par ailleurs, étant donné que le balourd du disque nu B1 a été positionné entre les deux petits lobes PL1 et PL2 (voir étape E31 de la Fig. 4), cela signifie que pour que le balourd B2 sur les aubes compense celui du disque, on doit avoir des gros lobes GL1, GL2 « plus gros » que les petits lobes PL1, PL2.

L'étape E51 est un test qui permet de passer à l'étape suivante tant que le balourd résultant B « disque + aubes » est supérieur au critère fixé (i.e. au seuil prédéterminé) et le nombre d'itération n est inférieur à un nombre maximal prédéterminé N1.

Le balourd résultant est déterminé en calculant le balourd total sur l'ensemble « disque + aubes ». Ainsi, à partir de la matrice M ordonnée des aubes, le balourd des aubes (module et angle) ainsi que le balourd résultant sont calculés comme suit :

$$Angle = atan\left(\sum_{aubes}\left[masse_{aube}\sin\left(angle_{aube}\frac{\pi}{180}\right)\right], \sum_{aubes}\left[masse_{aube}\cos\left(angle_{aube}\frac{\pi}{180}\right)\right]\right) * \frac{180}{\pi}$$

$$Module = Disk_{Radius}\sqrt{\left\{\sum_{aubes}\left[masse_{aube}\sin\left(angle_{aube}\frac{\pi}{180}\right)\right]\right\}^2 + \left\{\sum_{aubes}\left[masse_{aube}\cos\left(angle_{aube}\frac{\pi}{180}\right)\right]\right\}^2}$$

$$Balourd_{resultant} = \sqrt{\begin{array}{l}\left\{balourd_{disque}\cos\left(\frac{\pi}{180}angle_{disque}\right) + Module\cos\left(\frac{\pi}{180}Angle\right)\right\}^2 + \\ \left\{balourd_{disque}\sin\left(\frac{\pi}{180}angle_{disque}\right) + Module\sin\left(\frac{\pi}{180}Angle\right)\right\}^2\end{array}}$$

Par ailleurs, le nombre maximal prédéterminé d'itérations (ou de permutation) est fixé par exemple à N1=3000. Ce nombre a été sélectionné à partir d'un grand nombre d'essais d'équilibrage de disques. Le procédé s'arrête si le balourd résultant est inférieur au critère fixé ou si le nombre maximal prédéterminé est atteint.

Les étapes suivantes consistent à faire un équilibrage aléatoire, c'est-à-dire, à permuter de manière aléatoire des aubes entre d'une part le groupe des premier et deuxième gros lobes GL1, GL2 et d'autre part le groupe des premier et deuxième petit lobes PL1, PL2. En effet, comme précisé à l'étape E50, pour que le balourd B2 sur les aubes compense celui du disque, on doit avoir des gros lobes GL1, GL2 « plus gros » que les petits lobes PL1, PL2. Dans ce cas, une aube sera tirée de manière aléatoire de l'ensemble des premier et deuxième petit lobes PL1, PL2 en constatant qu'elles sont les aubes dans l'ensemble des premier et deuxième gros lobes GL1, GL2 qui ont une masse plus petite que l'aube tirée, et d'en choisir une de manière aléatoire, qui sera permutée avec ladite aube tirée. Par ailleurs, dans le cas où le groupe des premier et deuxième gros lobes GL1, GL2 a été « trop alourdi », l'aube qui sera tirée dans ce dernier devra être plus lourde que l'aube tirée dans le groupe des premier et deuxième petits lobes PL1, PL2. Ceci permet d'alléger le groupe des gros lobes GL1, GL2 et d'alourdir celui des petits lobes PL1, PL2. Ces étapes vont permettre petit à petit d'avoir un balourd B2 sur les aubes (ou plutôt la norme du vecteur balourd) qui se rapprochera de celui du disque nu.

En effet, à l'étape E52 une aube de masse $M_{PL}$ est tirée de manière aléatoire du groupe des premier et deuxième petits lobes PL1, PL2.

On notera que les permutations ne sont pas faites de manière totalement aléatoire. En fait, afin d'assurer une convergence rapide, le processeur 9 est configuré pour calculer le balourd B2 sur les aubes, afin de savoir s'il faut « alourdir» l'ensemble des premier et deuxième petits lobes PL1, PL2 ou bien l'alléger.

Ainsi, l'étape E53 est un test où le processeur 9 est configuré pour comparer le balourd B2 des aubes avec le balourd B1 du disque nu. Si le balourd B2 des aubes est inférieur au balourd B1 du disque nu, alors on passe à l'étape E54 où la permutation est réalisée avec une aube tirée aléatoirement dans le groupe des premier et deuxième gros lobes GL1, GL2 et dont la masse $M_{GL}$ est supérieure à celle tirée du groupe des premier et deuxième petits lobes PL1, PL2 (i.e. $M_{GL} > M_{PL}$).

En revanche, si le balourd B2 des aubes est supérieur au balourd B1 du disque nu, alors on passe à l'étape E55 où la permutation est réalisée avec une aube tirée aléatoirement dans l'ensemble des premier et deuxième gros lobes GL1, GL2 et dont la masse $M_{GL}$ est inférieure à celle tirée de l'ensemble des premier et deuxième petits lobes PL1, PL2 (i.e. $M_{GL} < M_{PL}$).

Une fois cette permutation réalisée, l'étape E56 consiste à réappliquer les étapes E14-E31 de la Fig. 4 concernant le placement des aubes. La ré-application de ces étapes permet de répartir les masses des aubes en quatre lobes GL1, GL2, PL1, PL2 de manière équilibrée.

Ensuite, on revient au test de l'étape E51 pour vérifier si le balourd résultant est devenu inférieur au critère fixé ou si le nombre d'itérations maximal a été atteint.

Dans la pratique, 90% des équilibrages de disque sont réalisés par des permutations selon le processus du bloc B41 sans aller aux blocs B42 et B43. En effet, comme précisé précédemment, le balourd B1 sur le disque nu n'est en général pas très important, et le fait d'avoir à l'étape E50 un balourd d'aubes B2 quasi nul (les groupes des petits et gros lobes étant très équilibrés initialement), permet d'arriver à un balourd total inférieur au critère fixé en un nombre limité d'itérations.

Toutefois, au cas où le nombre d'itérations maximal a été atteint mais le balourd résultant ne satisfait toujours pas le critère fixé, alors on passe au bloc B42 de permutations stochastiques.

La permutation stochastique se base sur l'utilisation d'un algorithme d'optimisation stochastique (méta-heuristique), visant à minimiser la fonction de balourd résultant (dite fonction d'énergie) dont la formule est décrite ci-dessus.

L'algorithme stochastique va modifier progressivement et aléatoirement le vecteur masse obtenu à la fin du processus itératif de permutation du bloc B41, et ne va garder que les modifications diminuant la fonction d'énergie. L'algorithme d'optimisation stochastique peut par exemple être un algorithme Génétique, un algorithme Tabou, ou bien un algorithme du Recuit Simulé.

Avec par exemple le Recuit Simulé, l'algorithme d'optimisation stochastique consiste en une suite d'itérations, dont chaque étape correspond à une permutation aléatoire d'une aube du groupe des premier et deuxième gros lobes GL1, GL2 avec le groupe des premier et deuxième petits lobes PL1, PL2. Chaque étape est suivie d'une recomposition de placement des aubes de la même manière que précédemment selon les étapes E14-E31 de la Fig. 4. Si la permutation diminue le balourd total, celle-ci est systématiquement validée, et l'algorithme passe à l'itération suivante. Si la permutation augmente le balourd total, celle-ci est acceptée avec une certaine probabilité, définie selon une loi dépendant d'un paramètre dit « température », qui diminue inversement avec le nombre d'itérations effectuées. Cette méthode a pour avantage d'éviter les minima locaux.

Les itérations se poursuivent ainsi jusqu'à ce que le balourd résultant soit inférieur au critère fixé ou que le nombre d'itérations maximal soit atteint.

Si le critère sur le balourd résultant n'est toujours pas respecté, l'algorithme passe alors au bloc B43 de permutations stochastiques directement sur la forme.

Ce troisième et dernier processus de permutation est le dernier recours du procédé au cas où le balourd total n'est toujours pas satisfaisant. Il est plus efficace en termes de réduction de balourd, mais a une répercussion sur la forme des lobes obtenus.

Similairement au bloc B42, le bloc B43 a recours à un algorithme d'optimisation stochastique sauf que la permutation se fait aléatoirement entre deux aubes standards (i.e. pas à léchettes durcies) de n'importe quel groupe.

D'autre part, cet algorithme ne comporte pas des étapes de reconstruction des lobes. Ainsi, une permutation peut amener une aube à être placée à un endroit qui violerait la disposition monotone des masses. Toutefois, afin de limiter ce phénomène, une permutation entre deux aubes est autorisée lorsque l'écart entre leur masse ne dépasse pas un paramètre correspondant à un pourcentage massique prédéterminé. Plus ce paramètre est élevé, plus la déformation de la forme de lobes sera importante, mais plus la convergence de la méthode sera rapide.

Tout comme dans les blocs précédents, un nombre d'itérations maximal est défini. Si celui-ci est atteint, le jeu d'aubes sera alors considéré comme non équilibrable.

A titre d'exemple, le nombre maximal d'itérations est calculé de la manière suivante :

$$steps = \min\left(A + B * \left\lfloor \frac{(balourd_{resultant} - coefficient_{heuristique})}{C} \right\rfloor, D\right)$$

Ainsi, plus le balourd résultant est loin du Coefficient_heuristique (qui correspond au seuil de balourd total acceptable), plus le nombre d'itérations sera important. Le Coefficient_heuristique peut prendre des valeurs comprises entre environ 0.5 cm.g et 5.0 cm.g. Les valeurs A, B, C et D sont des meta-paramètres sélectionnés de manière à optimiser le résultat final et de coût de calcul. A titre d'exemple, A=1000, B=50, C=0.1 et D=40000.

Les Fig. 8A et 8B illustrent la répartition des aubes selon leurs masses, ainsi que le positionnement des aubes à léchettes durcies $D_1$-$D_3$ résultant des tests du procédé selon un mode de réalisation de l'invention effectués sur plusieurs jeux d'aubes réels.

Le balourd résultant obtenu est de 0.28 cm.g, sachant que le seuil acceptable est de 5 cm.g et que le balourd disque nu était de 258 cm.g. Par ailleurs, la Fig. 5B montre que les angles entre les aubes à léchettes durcies $D_1$-$D_3$ sont supérieurs à 90°.

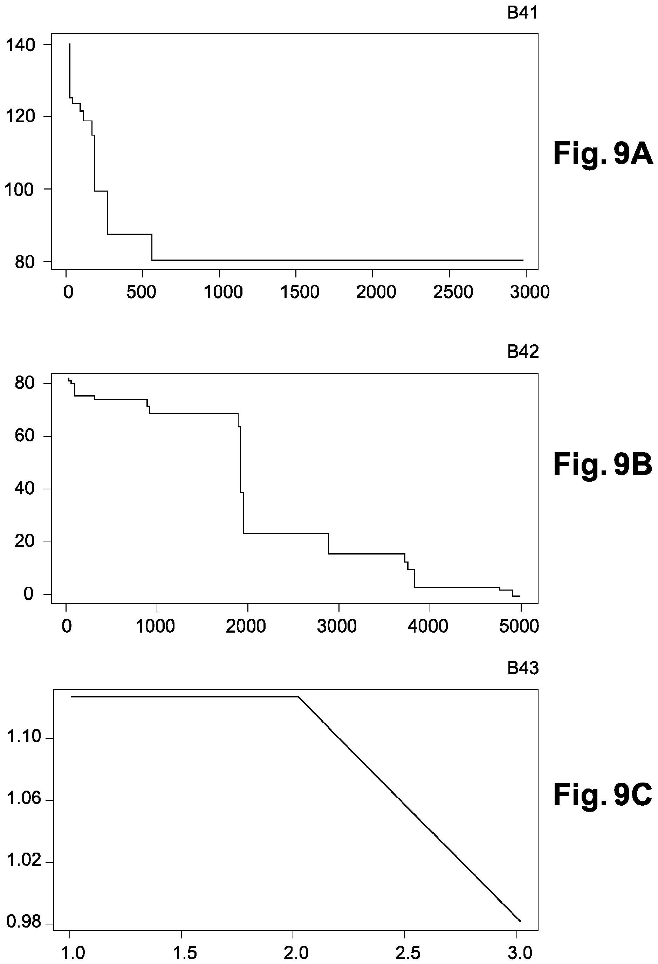

Les Figs. 9A-9C illustrent l'évolution du balourd résultant en fonction du nombre d'itérations dans le cas d'un jeu requérant l'usage des trois blocs B41-B43 pour la satisfaction d'un critère de balourd à 1cm.g. On notera que le temps total est de 125 secondes.

Plus particulièrement, la Fig. 9A concerne le bloc B41 et montre une stagnation autour de 80cm.g d'où le besoin de passer au bloc B42.

La Fig. 9B concerne le bloc B42 et montre une stagnation autour de 1,5 cm.g d'où le besoin de passer à au bloc B43.

Finalement, la Fig. 9C concernant le bloc B43 montre un balourd global très inférieur au seuil acceptable.

La présente invention permet d'augmenter la durée de vie des disques de turbines. En effet, la répartition des masses des aubes en quatre lobes a pour conséquence de limiter les déformations du disque. Plus particulièrement, une configuration en quatre lobes permet au disque de garder une forme sphérique lors de la rotation contrairement par exemple à une formation en deux lobes qui entraînerait une déformation elliptique du disque rotor. Cette forme en quatre lobes permet également de limiter la différence de masse entre aubes adjacentes. Un nombre de lobes plus élevé ou une configuration sans lobe impliquerait une difficulté à respecter une limitation des différences d'aubes adjacentes.

En outre, la présente invention apporte une répartition monotone des masses des aubes. On notera que lorsqu'une aube de masse importante est placée à côté d'une aube de masse faible, la première aube aura tendance à tirer (avec la force centrifuge) sur le disque nu de manière plus importante que l'aube de masse plus faible engendrant des déformations plus importantes au niveau du disque nu. Ainsi, la monotonie de la répartition des masses évite ce genre de problèmes.

Par ailleurs, les aubes à léchettes durcies sont généralement placées pour créer une rainure dans l'abradable, permettant de limiter l'écoulement d'air des turbines. La présente invention permet de les espacer au maximum garantissant ainsi la création effective de la rainure.

En outre, la présente invention utilise des algorithmes d'équilibrage stochastiques qui permettent d'obtenir tous les résultats et contraintes ci-dessus de manière automatique, efficace et avec très peu de temps de calcul.

La présente invention permet ainsi aux assembleurs de savoir comment placer les aubes sur le disque selon leurs masses de manière simple, efficace et très rapide tout en permettant d'augmenter la durée de vie des disques de moteurs d'aéronefs.

**Revendications**

**1.** Procédé d'équilibrage d'un ensemble d'aubes (5) destinées à être disposées sur un disque nu (7) d'un moteur d'aéronef, le disque nu (7) comportant un nombre déterminé d'alvéoles ($a_i$) numérotées destinées à recevoir le même nombre déterminé d'aubes qui peuvent présenter une dispersion de masse, les aubes étant triées par ordre monotone de leur masse ($m_i$) formant un ensemble ordonné d'aubes, ledit procédé étant **caractérisé en ce qu'**il comporte les étapes suivantes :

- séparer l'ensemble ordonné d'aubes de manière équilibrée en quatre lobes constitués d'une première classe dite Gros lobes, comprenant un premier gros lobe (GL1) et un deuxième gros lobe (GL2), et d'une deuxième classe dite Petits lobes, comprenant un premier petit lobe (PL1) et un deuxième petit lobe (PL2), les aubes étant classées dans chaque lobe selon un ordre de placement courant,
- agencer les quatre lobes (GL1, GL2, PL1, PL2) sur le disque nu (7) en faisant correspondre l'ordre de placement courant des aubes aux alvéoles numérotées du disque nu, et en les disposant suivant une configuration déterminée par rapport à un premier vecteur balourd (B1) représentatif d'un balourd inhérent au disque nu, et
- réorganiser les aubes dans les différents lobes selon un processus itératif de permutation adapté pour équilibrer le premier vecteur balourd par un second vecteur balourd résultant de la dispersion de masse des aubes et de leurs agencements sur le disque, ladite réorganisation définissant un ordre de placement final des aubes sur les alvéoles du disque.

**2.** Procédé selon la revendication 1, **caractérisé en ce que** la séparation de l'ensemble d'aubes en quatre lobes comporte les étapes suivantes :

- séparer de manière équilibrée l'ensemble ordonné d'aubes en des premier et second groupes (GL,PL) sensiblement équilibrés en masse en attribuant des aubes distinctives ($D_i$) comprises dans l'ensemble ordonné d'aubes aux premier et second groupes selon un processus prédéterminé et en partageant les autres aubes par ordre décroissant de leur masse de manière alternée entre les premier et second groupes (GL,PL) tout en tenant compte du nombre d'aubes distinctives attribuées à chacun des premier et second groupes, et
- composer les premier et deuxième gros lobes (GL1, GL2) de manière équilibrée à partir dudit premier groupe (GL) et composer les premier et deuxième petits lobes (PL1, PL2) de manière équilibrée à partir dudit second groupe (PL).

**3.** Procédé selon la revendication 2, **caractérisé en ce que** les aubes distinctives ($D_i$) sont des aubes à léchettes durcies qui sont distribuées entre les premier et second groupes (GL, PL) suivant leur nombre tout en optimisant l'espacement entre elles, selon les étapes suivantes :

- si l'ensemble d'aubes comporte trois aubes à léchettes durcies, les deux plus lourdes sont placées dans le premier groupe (GL) tandis que la plus légère est placée dans le second groupe (PL), et
- si l'ensemble d'aubes comporte une à deux aubes à léchettes durcies, elle(s) est(sont) placée(s) dans le premier groupe (GL).

**4.** Procédé selon la revendication 2 ou 3, **caractérisé en ce que** la composition des premier et deuxième gros ou petits lobes (GL1, GL2 ; PL1, PL2) au sein du premier ou second groupes (GP; PL) respectivement est réalisée en distribuant les aubes sur des premier, deuxième, troisième et quatrième demi-lobes (DG1-DG4; DP1-DP4) du premier ou second groupe en fonction des propriétés de parité et/ou de divisibilité du nombre d'aubes constituant le premier groupe (DG) ou le second groupe (DP).

**5.** Procédé selon la revendication 4, **caractérisé en ce que** si le nombre d'aubes (5) du premier ou second groupe (DG ; DP) est un nombre pair non divisible par quatre, alors les première et deuxième aubes sont placées aux sommets des premier et deuxième gros ou petits lobes (DG1, DG2; DP1, DP2) et les aubes restantes sont distribuées de manière prédéterminée sur les premier, deuxième, troisième et quatrième demi-lobes (DG1-DG4 ; DP1-DP4) du premier ou second groupe (DG ; DP).

**6.** Procédé selon la revendication 4, **caractérisé en ce que** si le nombre d'aubes (5) du premier ou second groupe (DG ; DP) est un nombre divisible par quatre, alors les aubes sont distribuées équitablement de manière prédéterminée sur les premier, deuxième, troisième et quatrième demi-lobes (DG1-DG4 ; DP1-DP4) du premier ou second groupe (DG ; DP).

**7.** Procédé selon la revendication 4, **caractérisé en ce que** si le nombre d'aubes (5) du premier ou second groupe (DG ; DP) est un nombre impair, alors la dernière aube est positionnée entre les deux gros ou petits lobes et si le nombre d'aubes restantes est divisible par quatre, alors elles sont distribuées de manière prédéterminée sur les premier, deuxième, troisième et quatrième demi-lobes (DG1-DG4 ; DP1-DP4) du premier ou second groupe (DG ; DP).

**8.** Procédé selon la revendication 4, **caractérisé en ce que** si le nombre d'aubes (5) du premier ou second groupe (DG ; DP) est un nombre impair, alors la dernière aube est positionnée entre les deux gros ou petits lobes et si le nombre d'aubes restantes est non divisible par quatre, alors les première et deuxième aubes sont placées aux sommets des premier et deuxième gros ou petits lobes et les aubes restantes sont distribuées de manière prédéterminée sur les premier, deuxième, troisième et quatrième demi-lobes (DG1-DG4 ; DP1-DP4) du premier ou second groupe (DG ; DP).

**9.** Procédé selon l'une quelconque des revendications 5 à 8, **caractérisé en ce que** la distribution de manière prédéterminée d'un nombre d'aubes divisible par quatre sur les premier, deuxième, troisième et quatrième demi-lobes du premier ou second groupe (DG ; DP) est réalisée selon des séquences périodiques de huit étapes de la manière suivante :

- placer la première aube courante en première position non occupée du deuxième demi-lobe (DG2 ; DP2),
- placer la deuxième aube courante en première position non occupée du premier demi-lobe (DG1 ; DP1),

- placer la troisième aube courante en première position non occupée du quatrième demi-lobe (DG4 ; DP4),
- placer la quatrième aube courante en première position non occupée du troisième demi-lobe (DG3 ; DP3), et
- placer les quatre aubes suivantes sur les demi-lobes dans le sens inverse des étapes précédentes.

10. Procédé selon l'une quelconque des revendications précédentes, **caractérisé en ce que** la configuration déterminée comporte l'agencement des premier et deuxième petits lobes (PL1, PL2) sur le disque nu (7) de part et d'autre du premier vecteur balourd (B1).

11. Procédé selon la revendication 10, **caractérisé en ce que** ledit processus itératif de permutation comporte les étapes suivantes :

- permutations aléatoires d'aubes de manière itérative entre le premier groupe et le second groupe tout en réappliquant les étapes selon les revendications 2 à 9 après chaque itération,
- si, à l'issue des permutations de l'étape précédente, le balourd résultant est supérieur à un seuil prédéterminé, alors on réalise des permutations stochastiques d'aubes entre le premier groupe et le second groupe tout en réappliquant les étapes selon les revendications 2 à 9 après chaque itération, et
- si, à l'issue des permutations de l'étape précédente, le balourd résultant est supérieur audit seuil prédéterminé, alors on réalise des permutations stochastiques directement sur la forme entre le premier groupe et le second groupe.

12. Procédé selon la revendication 11, **caractérisé en ce qu'**on continue les itérations dans chacune des étapes de permutation tant que le balourd résultant est supérieur au seuil prédéterminé et le nombre d'itérations est inférieur à un nombre maximal prédéterminé.

13. Système d'équilibrage d'un ensemble d'aubes (5) destinées à être disposées sur un disque nu (7) d'un moteur d'aéronef, le disque nu (7) comportant un nombre déterminé d'alvéoles ($a_i$) numérotées destinées à recevoir le même nombre déterminé d'aubes qui peuvent présenter une dispersion de masse, les aubes étant triées par ordre monotone de leur masse ($m_i$) formant un ensemble ordonné d'aubes, ledit système étant **caractérisé en ce qu'**il comporte un processeur configuré pour :

- séparer l'ensemble ordonné d'aubes de manière équilibrée en quatre lobes constitués d'une première classe dite Gros lobes, comprenant un premier gros lobe (GL1) et un deuxième gros lobe (GL2), et d'une deuxième classe dite Petits lobes, comprenant un premier petit lobe (PL1) et un deuxième petit lobe (PL2), les aubes étant classées dans chaque lobe selon un ordre de placement courant,
- agencer les quatre lobes (GL1, GL2, PL1, PL2) sur le disque nu (7) en faisant correspondre l'ordre de placement courant des aubes aux alvéoles numérotées du disque nu, et
- agencer les quatre lobes (GL1, GL2, PL1, PL2) sur le disque nu (7) en les disposant suivant une configuration déterminée par rapport à un premier vecteur balourd (B1) représentatif d'un balourd inhérent au disque nu, et
- réorganiser les aubes dans les différents lobes selon un processus itératif de permutation adapté pour équilibrer le premier vecteur balourd par un second vecteur balourd résultant de la dispersion de masse des aubes et de leurs agencements sur le disque, ladite réorganisation définissant un ordre de placement final des aubes sur les alvéoles du disque.

**Patentansprüche**

1. Verfahren zum Auswuchten eines Satzes von Schaufeln (5), die dazu bestimmt sind, auf einer blanken Scheibe (7) eines Luftfahrzeugmotors angeordnet zu werden, wobei die blanke Scheibe (7) eine bestimmte Anzahl von nummerierten Zellen ($a_i$) umfasst, die dazu bestimmt sind, die gleiche bestimmte Anzahl von Schaufeln aufzunehmen, die eine Massenstreuung aufweisen können, wobei die Schaufeln in monotoner Reihenfolge ihrer Masse ($m_i$) sortiert sind, die einen geordneten Satz von Schaufeln bildet, wobei das Verfahren **dadurch gekennzeichnet ist, dass** es die folgenden Schritte umfasst:

- Trennen des geordneten Satzes von Schaufeln auf ausgewogene Weise in vier Keulen, die aus einer ersten Klasse von Keulen, große Keulen genannt, mit einer ersten großen Keule (GL1) und einer zweiten großen Keule (GL2), und einer zweiten Klasse von Keulen, kleine Keulen genannt, mit einer ersten kleinen Keule (PL1) und einer zweiten kleinen Keule (PL2), bestehen, wobei die Schaufeln in jeder Keule gemäß einer gängigen Anordnungsreihenfolge eingeordnet werden,

- Anordnen der vier Keulen (GL1, GL2, PL1, PL2) auf der blanken Scheibe (7), wobei die gängige Anordnungsreihenfolge der Schaufeln den nummerierten Zellen der blanken Scheibe entspricht und sie in einer bestimmten Konfiguration in Bezug auf einen ersten Unwuchtvektor (B1) angeordnet werden, der für eine der blanken Scheibe eigene Unwucht repräsentativ ist, und

- Neuanordnen der Schaufeln in den verschiedenen Keulen gemäß einem iterativen Permutationsprozess, der geeignet ist, den ersten Unwuchtvektor durch einen zweiten Unwuchtvektor auszugleichen, der sich aus der Massenstreuung der Schaufeln und ihrer Anordnungen auf der Scheibe ergibt, wobei die Neuanordnung eine endgültige Anordnungsreihenfolge der Schaufeln an den Zellen der Scheibe definiert.

2. Verfahren nach Anspruch 1, **dadurch gekennzeichnet, dass** das Trennen des Satzes von Schaufeln in vier Keulen die folgenden Schritte umfasst:

- Trennen des geordneten Satzes von Schaufeln auf ausgewogene Weise in eine erste und eine zweite Gruppe (GL, PL), die in ihrer Masse im Wesentlichen ausgeglichen sind, durch Zuweisen markanter Schaufeln ($D_i$), die in dem geordneten Satz von Schaufeln enthalten sind, zu der ersten und der zweiten Gruppe gemäß einem vorbestimmten Prozess und durch Aufteilen der übrigen Schaufeln in absteigender Reihenfolge ihrer Masse abwechselnd zwischen der ersten und der zweiten Gruppe (GL, PL) unter Berücksichtigung der Anzahl markanter Schaufeln, die jeder der ersten und der zweiten Gruppe zugewiesen wurden, und

- Zusammensetzen der ersten und der zweiten großen Keule (GL1, GL2) in ausgewogener Weise aus der ersten Gruppe (GL) und Zusammensetzen der ersten und der zweiten kleinen Keule (PL1, PL2) in ausgewogener Weise aus der zweiten Gruppe (PL).

3. Verfahren nach Anspruch 2, **dadurch gekennzeichnet, dass** die markanten Schaufeln ($D_i$) Schaufeln mit gehärteten Stegen sind, die auf die erste und die zweite Gruppe (GL, PL) entsprechend ihrer Anzahl verteilt werden, wobei der Abstand zwischen diesen optimiert wird, gemäß den folgenden Schritten:

- wenn der Satz von Schaufeln drei Schaufeln mit gehärteten Stegen aufweist, werden die beiden schwereren in der ersten Gruppe (GL) angeordnet, während die leichtere in der zweiten Gruppe (PL) angeordnet wird, und

- wenn der Satz von Schaufeln ein bis zwei Schaufeln mit gehärteten Stegen aufweist, wird/werden diese in der ersten Gruppe (GL) angeordnet.

4. Verfahren nach Anspruch 2 oder 3, **dadurch gekennzeichnet, dass** das Zusammensetzen der ersten und der zweiten großen bzw. kleinen Keulen (GL1, GL2; PL1, PL2) innerhalb der ersten bzw. der zweiten Gruppe (GP; PL) durch Verteilen der Schaufeln auf eine erste, zweite, dritte und vierte Halbkeule (DG1-DG4; DP1-DP4) der ersten bzw. zweiten Gruppe in Abhängigkeit von den Eigenschaften bezüglich Parität und/oder Teilbarkeit der Anzahl der Schaufeln, die die erste Gruppe (DG) bzw. die zweite Gruppe (DP) bilden, erfolgt.

5. Verfahren nach Anspruch 4, **dadurch gekennzeichnet, dass** dann, wenn die Anzahl der Schaufeln (5) der ersten bzw. der zweiten Gruppe (DG; DP) eine gerade Zahl ist, die nicht durch vier teilbar ist, die erste und die zweite Schaufel an den Scheitelpunkten der ersten und der zweiten großen bzw. kleinen Keulen (DG1, DG2; DP1, DP2) angeordnet werden und die übrigen Schaufeln in einer vorbestimmten Weise auf die erste, zweite, dritte und vierte Halbkeule (DG1-DG4; DP1-DP4) der ersten bzw. der zweiten Gruppe (DG; DP) verteilt werden.

6. Verfahren nach Anspruch 4, **dadurch gekennzeichnet, dass** dann, wenn die Anzahl der Schaufeln (5) der ersten bzw. der zweiten Gruppe (DG; DP) eine durch vier teilbare Zahl ist, die Schaufeln in vorbestimmter Weise gleichmäßig auf die erste, zweite, dritte und vierte Halbkeule (DG1-DG4; DP1-DP4) der ersten bzw. der zweiten Gruppe (DG; DP) verteilt werden.

7. Verfahren nach Anspruch 4, **dadurch gekennzeichnet, dass** dann, wenn die Anzahl der Schaufeln (5) der ersten bzw. der zweiten Gruppe (DG; DP) eine ungerade Zahl ist, die letzte Schaufel zwischen den beiden großen bzw. kleinen Keulen positioniert wird, und wenn die Anzahl der übrigen Schaufeln durch vier teilbar ist, sie in einer vorbestimmten Weise auf die erste, zweite, dritte und vierte Halbkeule (DG1-DG4; DP1-DP4) der ersten bzw. der zweiten Gruppe (DG; DP) verteilt werden.

8. Verfahren nach Anspruch 4, **dadurch gekennzeichnet, dass** dann, wenn die Anzahl der Schaufeln (5) der ersten bzw. der zweiten Gruppe (DG; DP) eine ungerade Zahl ist, die letzte Schaufel zwischen den beiden großen bzw. kleinen Keulen positioniert wird, und wenn die Anzahl der übrigen Schaufeln nicht durch vier teilbar ist, die erste und die zweite Schaufel an den Scheitelpunkten der ersten und der zweiten großen bzw. kleinen Keulen positioniert werden und die übrigen Schaufeln in einer vorbestimmten Weise auf die erste, zweite, dritte und vierte Halbkeule (DG1-DG4; DP1-DP4) der ersten bzw. zweiten Gruppe (DG; DP) verteilt werden.

9. Verfahren nach einem der Ansprüche 5 bis 8, **dadurch gekennzeichnet, dass** das Verteilen in vorbestimmter Weise einer durch vier teilbaren Anzahl von Schaufeln auf die erste, zweite, dritte und vierte Halbkeule der ersten bzw. der zweiten Gruppe (DG; DP) in periodischen Sequenzen von acht Schritten wie folgt durchgeführt wird:

- Positionieren der ersten gewöhnlichen Schaufel an die erste unbesetzte Stelle der zweiten Halbkeule (DG2; DP2),
- Positionieren der zweiten gewöhnlichen Schaufel an die erste unbesetzte Stelle der ersten Halbkeule (DG1; DP1),
- Positionieren der dritten gewöhnlichen Schaufel an die erste unbesetzte Stelle der vierten Halbkeule (DG4; DP4),
- Positionieren der vierten gewöhnlichen Schaufel an die erste unbesetzte Stelle der dritten Halbkeule (DG3; DP3), und
- Positionieren der folgenden vier Schaufeln auf die Halbkeulen in umgekehrter Weise zu den vorherigen Schritten.

10. Verfahren nach einem der vorhergehenden Ansprüche, **dadurch gekennzeichnet, dass** die bestimmte Konfiguration die Anordnung der ersten und der zweiten kleinen Keule (PL1, PL2) auf der blanken Scheibe (7) zu beiden Seiten des ersten Unwuchtvektors (B1) umfasst.

11. Verfahren nach Anspruch 10, **dadurch gekennzeichnet, dass** der iterative Permutationsprozess die folgenden Schritte umfasst:

- willkürliche Permutationen von Schaufeln auf iterative Weise zwischen der ersten Gruppe und der zweiten Gruppe, während die Schritte nach den Ansprüchen 2 bis 9 nach jeder Iteration erneut ausgeführt werden,
- wenn nach den Permutationen des vorherigen Schritts die resultierende Unwucht größer als ein vorbestimmter Schwellenwert ist, dann werden stochastische Permutationen von Schaufeln zwischen der ersten Gruppe und der zweiten Gruppe durchgeführt, während die Schritte nach den Ansprüchen 2 bis 9 nach jeder Iteration erneut ausgeführt werden, und
- wenn nach den Permutationen des vorherigen Schritts die resultierende Unwucht größer als der vorbestimmte Schwellenwert ist, dann werden stochastische Permutationen zwischen der ersten Gruppe und der zweiten Gruppe direkt formal durchgeführt.

12. Verfahren nach Anspruch 11, **dadurch gekennzeichnet, dass** die Iterationen in jedem der Permutationsschritte fortgesetzt werden, solange die resultierende Unwucht über dem vorbestimmten Schwellenwert liegt und die Anzahl der Iterationen unter einer vorbestimmten maximalen Anzahl liegt.

13. System zum Auswuchten eines Satzes von Schaufeln (5), die dazu bestimmt sind, auf einer blanken Scheibe (7) eines Luftfahrzeugmotors angeordnet zu werden, wobei die blanke Scheibe (7) eine bestimmte Anzahl von nummerierten Zellen ($a_i$) umfasst, die dazu bestimmt sind, die gleiche bestimmte Anzahl von Schaufeln aufzunehmen, die eine Massenstreuung aufweisen können, wobei die Schaufeln in monotoner Reihenfolge ihrer Masse ($m_i$) sortiert sind, die einen geordneten Satz von Schaufeln bildet, wobei das System **dadurch gekennzeichnet ist, dass** es einen Prozessor umfasst, der konfiguriert ist zum:

- Trennen des geordneten Satzes von Schaufeln auf ausgewogene Weise in vier Keulen, die aus einer ersten Klasse von Keulen, große Keulen genannt, mit einer ersten großen Keule (GL1) und einer zweiten großen Keule (GL2), und einer zweiten Klasse von Keulen, kleine Keulen genannt, mit einer ersten kleinen Keule (PL1) und einer zweiten kleinen Keule (PL2), bestehen, wobei die Schaufeln in jeder Keule gemäß einer gängigen Anordnungsreihenfolge eingeordnet werden,
- Anordnen der vier Keulen (GL1, GL2, PL1, PL2) auf der blanken Scheibe (7), wobei die gängige Anordnungsreihenfolge der Schaufeln den nummerierten Zellen der blanken Scheibe entspricht, und
- Anordnen der vier Keulen (GL1, GL2, PL1, PL2) auf der blanken Scheibe (7), indem sie gemäß einer bestimmten Konfiguration in Bezug auf einen ersten Unwuchtvektor (B1) angeordnet werden, der für eine der blanken Scheibe eigene Unwucht repräsentativ ist, und
- Neuanordnen der Schaufeln in den verschiedenen Keulen gemäß einem iterativen Permutationsprozess, der geeignet ist, den ersten Unwuchtvektor durch einen zweiten Unwuchtvektor auszugleichen, der sich aus der Massenstreuung der Schaufeln und ihrer Anordnungen auf der Scheibe ergibt, wobei die Neuanordnung eine endgültige Anordnungsreihenfolge der Schaufeln an den Zellen der Scheibe definiert.

**Claims**

1. Method for balancing a set of blades (5) provided to be arranged on a bare disk (7) of an aircraft engine, the bare disk (7) comprising a determined number of numbered slots ($a_i$) provided to receive the same determined number of blades that can have a dispersion of mass, the blades being sorted by monotonic order of their mass ($m_i$), forming an ordered set of blades, said method being **characterised in that** it comprises the following steps:

   - separate the ordered set of blades in a balanced manner into four lobes composed of a first category designated Large lobes, comprising a first large lobe (GL1), and a second large lobe (GL2), and a second category designated Small lobes, comprising a first small lobe (PL1) and a second small lobe (PL2), the blades being categorised in each lobe in a current placement order,
   - arrange the four lobes (GL1, GL2, PL1, PL2) on the bare disk (7) making the current placement order of the blades correspond to the numbered slots of the bare disk, and disposing them in a configuration determined as a function of a first out-of-balance vector (B1) representative of an out-of-balance inherent to the bare disk, and
   - reorganise the blades in the different lobes using an iterative permutation process adapted to balance the first out-of-balance vector by a second out-of-balance vector resulting from the mass dispersion of the blades and their arrangements on the disk, said reorganisation defining a final placement order of the blades on the disk slots.

2. Method according to claim 1, **characterised in that** separation of the set of blades into four lobes comprises the following steps:

   - separate the ordered set of blades into first and second groups (GL,PL) substantially balanced in mass in a balanced manner, assigning distinctive blades ($D_i$) included in the ordered set of blades to the first and second groups according to a predetermined process, and sharing the other blades in decreasing order of their mass alternating between the first and second groups (GL,PL) while taking account of the number of distinctive blades assigned to each of the first and second groups, and
   - compose the first and second large lobes (GL1, GL2) in a balanced manner based on said first group (GL) and compose the first and second small lobes (PL1, PL2) in a balanced manner based on said second group (PL).

3. Method according to claim 2, **characterised in that** the distinctive blades ($D_i$) are blades with hardened seal fins that are distributed between the first and second groups (GL, PL) depending on their number while optimising the spacing between them, according to the following steps:

   - if the set of blades comprises three blades with hardened seal fins, the two heaviest are placed in the first group (GL) while the lightest is placed in the second group (PL), and
   - if the set of blades comprises one or two blades with hardened seal fins, it is (they are) placed in the first group (GL).

4. Method according to claim 2 or 3, **characterised in that** the composition of the first and second large or small lobes (GL1, GL2; PL1, PL2) within the first or second groups (GP; PL) respectively is determined by distributing the blades on the first, second, third and fourth half-lobes (DG1-DG4; DP1-DP4) of the first or the second group as a function of parity and/or divisibility properties of the number of blades forming the first group (DG) or the second group (DP).

5. Method according to claim 4, **characterised in that** if the number of blades (5) in the first or second group (DG; DP) is an even number that is not divisible by four, the first and second blades are then placed at the vertices of the first and second large or small lobes (DG1, DG2; DP1, DP2) and the remaining blades are distributed in a predetermined manner on the first, second, third and fourth half-lobes (DG1-DG4; DP1-DP4) of the first or second group (DG; DP).

6. Method according to claim 4, **characterised in that** if the number of blades (5) in the first or second group (DG; DP) is a number that is divisible by four, the blades are distributed equitably in a predetermined manner on the first, second, third and fourth half-lobes (DG1-DG4; DP1-DP4) of the first or second group (DG; DP).

7. Method according to claim 4, **characterised in that** if the number of blades (5) in the first or second group (DG;

DP) is an odd number, the last blade is positioned between the two large or small lobes and if the number of remaining blades is divisible by four, they are distributed in a predetermined manner on the first, second, third and fourth half-lobes (DG1-DG4; DP1-DP4) of the first or second group (DG; DP).

8. Method according to claim 4, **characterised in that** if the number of blades (5) in the first or second group (DG; DP) is an odd number, the last blade is positioned between the two large or small lobes and if the number of remaining blades is not divisible by four, the first and second blades are placed at the vertices of the first and second large or small lobes and the remaining blades are distributed in a predetermined manner on the first, second, third and fourth half-lobes (DG1-DG4; DP1-DP4) of the first or second group (DG; DP).

9. Method according to any one of claims 5 to 8, **characterised in that** the distribution in a predetermined manner of a number of blades divisible by four on the first, second, third and fourth half-lobes of the first or second group (DG; DP) is made according to periodic sequences of eight steps as follows:

   - place the first current blade in the first unoccupied position in the second half-lobe (DG2; DP2),
   - place the second current blade in the first unoccupied position in the first half-lobe (DG1; DP1),
   - place the third current blade in the first unoccupied position in the fourth half-lobe (DG4; DP4),
   - place the fourth current blade in the first unoccupied position in the third half-lobe (DG3; DP3), and
   - place the next four blades on the half-lobes in the reverse order of the order in the previous steps.

10. Method according to any one of preceding claims, **characterised in that** the determined configuration comprises the arrangement of the first and second small lobes (PL1, PL2) on the bare disk (7) on each side of the first out-of-balance vector (B1).

11. Method according to claim 10, **characterised in that** said iterative permutation process comprises the following steps:

    - iterative random permutations of blades between the first group and the second group, reapplying the steps according to claims 2 to 9 after each iteration,
    - if, after the permutations in the previous step, the resulting out-of-balance is greater than a predetermined threshold, stochastic permutations of blades are made between the first group and the second group while reapplying the steps according to claims 2 to 9 after each iteration, and
    - if, after the permutations in the previous step, the resulting out-of-balance is greater than said predetermined threshold, stochastic permutations are made directly on the shape between the first group and the second group.

12. Method according to claim 11, **characterised in that** the iterations are continued in each permutation step as long as the out-of-balance mass is larger than the predetermined threshold and the number of iterations is smaller than a maximum predetermined number.

13. System for balancing a set of blades (5) provided to be arranged on a bare disk (7) of an aircraft engine, the bare disk (7) comprising a determined number of numbered slots ($a_i$) provided to receive the same determined number of blades that can have a dispersion of mass, the blades being sorted by monotonic order of their mass ($m_i$), forming an ordered set of blades, said system being **characterised in that** it comprises a processor configured to:

    - separate the ordered set of blades in a balanced manner into four lobes composed of a first category designated Large lobes, comprising a first large lobe (GL1) and a second large lobe (GL2), and a second category designated Small lobes, comprising a first small lobe (PL1) and a second small lobe (PL2), the blades being categorised in each lobe in a current placement order,
    - arrange the four lobes (GL1, GL2, PL1, PL2) on the bare disk (7) such that the current placement order of the blades corresponds to the numbered slots of the bare disk, and
    - arrange the four lobes (GL1, GL2, PL1, PL2) on the bare disk (7) in a configuration determined as a function of a first out-of-balance vector (B1) representative of an out-of-balance inherent to the bare disk, and
    - reorganise the blades in the different lobes using an iterative permutation process adapted to balance the first out-of-balance vector by a second out-of-balance vector resulting from the mass dispersion of the blades and their arrangements on the disk, said reorganisation defining a final placement order of the blades on the disk slots.

**Fig. 1**

**Fig. 2**

**Fig. 3**

**E11**

5    V    M

$$\begin{pmatrix} \vdots & \alpha_1 & 1 \\ & \vdots & 0 \\ m_i & \alpha_i & 0 \\ & \vdots & \vdots \\ & \alpha_N & 0 \end{pmatrix}$$

$a_N$  $a_1$  $a_i$

5

**E12**

$$M = \begin{pmatrix} m_1 & \alpha_1 & 1 \\ \vdots & \vdots & 0 \\ m_i & \alpha_i & \vdots \\ \vdots & \vdots & \vdots \\ m_N & \alpha_N & 0 \end{pmatrix} \quad m_1 > m_2 > ... > m_N$$

**E13**

$$M1 = \begin{pmatrix} D_1 & \vdots & 1 \\ D_2 & & 1 \\ \vdots & \alpha_i & 0 \\ \vdots & \vdots & \vdots \\ m_L & \vdots & 0 \end{pmatrix} \qquad M2 = \begin{pmatrix} D_3 & \vdots & 1 \\ & & 0 \\ \vdots & \alpha_j & \vdots \\ \vdots & \vdots & \vdots \\ m_L & \vdots & 0 \end{pmatrix}$$

GL    PL

**E14**

LG1

LG2

LP2

LP1

GL    PL

**E15**

L=4p         L=2q+1 & L-1=4p
L=2q & L≠4p  L=2q+1 & L-1≠4p

$\vdots$

**Fig.4A**

**Fig.4B**

**Fig.4C**

DG1(DP1) — DG2(DP2)

DG3(DP3)

5

5 — DG4(DP4)

E19

DG1(DP1) — $a_1$ — DG2(DP2)

DG3(DP3)

5

DG4(DP4)

E20

$a_2$  $a_1$

E21

$a_2$  $a_1$

$a_3$

E22

$a_2$  $a_1$

$a_4$

$a_3$

E23

**Fig.4D**

**Fig. 5**

**Fig. 6**

**Fig. 7**

**Fig. 8A**

**Fig. 8B**

B41

Fig. 9A

B42

Fig. 9B

B43

Fig. 9C

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2007198265 B